# FASCICULE DE BREVET EUROPEEN

(11) **EP 3 702 222 B1**
(45) Date de publication et mention de la délivrance du brevet: **04.05.2022**
(21) Numéro de dépôt: 20159689.7
(22) Date de dépôt: 27.02.2020
(51) Int. Cl.: B60R 19/12, B62D 25/08

(54) **DISPOSITIF DE PROTECTION POUR UN VÉHICULE AUTOMOBILE**
SCHUTZVORRICHTUNG FÜR EIN KRAFTFAHRZEUG
PROTECTIVE DEVICE FOR A MOTOR VEHICLE

(30) Priorité: 27.02.2019 FR 1901988
(43) Date de publication de la demande: 02.09.2020
(73) Titulaire: Renault s.a.s, 92100 Boulogne Billancourt (FR)
(72) Inventeur: DUGARDIN, Stéphane, 78230 Le Pecq (FR); RIOU, Jean-Christophe, 78640 Villiers Saint Frederic (FR); SARI HASSOUN, Sarah, 78340 les Clayes Sous Bois (FR); MONSELET, Thierry, 72190 SARGE-LES-LE MANS (FR); NEVEU, CHRISTOPHE, 72560 CHANGE (FR)
(74) Mandataire: Renault Group

(56) Documents cités:
- WO-A1-2012/153601
- WO-A1-2017/222020
- WO-A2-2006/111670
- DE-A1-102015 010 886
- JP-A- 2004 203 183
- KR-A- 20120 010 500
- US-A1- 2017 096 116

## Description

### Domaine Technique de l'invention

L'invention concerne un dispositif de protection pour un véhicule automobile, le dispositif comprenant deux traverses avant. L'invention porte aussi sur un véhicule automobile comprenant un tel dispositif de protection.

### Etat de la technique antérieure

Les constructeurs automobiles cherchent à optimiser la sécurité des personnes et à minimiser les conséquences négatives d'un choc ou d'un accident. Notamment, en cas de chocs frontal, les constructeurs automobiles cherchent non seulement à minimiser les déformations du véhicule, mais également à minimiser les déformations de l'objet ou de l'autre véhicule percuté.

Afin de qualifier l'aptitude d'un véhicule à préserver ses occupants ainsi que l'objet ou le véhicule percuté, des tests normalisés sont proposés. En particulier, le programme européen d'évaluation des nouveaux véhicules, EuroNcap, propose un test dit de "barrière déformable décalée", également dénommé par son abréviation anglaise MPDB, comme "Mobile offset Progressive Deformable Barrier". Lors de ce test, une barrière, de conception normalisée, est propulsée à 50km/h contre l'avant d'un véhicule se déplaçant également à 50km/h dans le sens opposé. Lors de ce test, un taux de recouvrement (défini comme une proportion de la largeur du véhicule en vis à vis de la barrière) est généralement établi à une valeur de l'ordre de 50%, de sorte que la barrière percute seulement une partie gauche ou droite de l'avant du véhicule. Un tel taux de recouvrement correspond aux situations réelles observées en accidentologie.

Après la collision, on observe les déformations de la barrière et on attribue un score au véhicule en fonction des déformations de la barrière. Moins la barrière est déformée ou abîmée, plus le score est élevé. On peut ainsi qualifier l'aptitude du véhicule à préserver l'objet ou le véhicule percuté.

Par ailleurs, on observe également après la collision les déformations du tablier du véhicule. Le tablier est un élément de la caisse du véhicule séparant le compartiment moteur de l'habitacle. Plus le tablier est déformé en direction de l'habitacle et plus les risques de blessure sont importants, notamment au niveau des jambes des passagers avant. Les constructeurs cherchent donc à obtenir une déformation aussi faible que possible du tablier. KR20120010500 montre un dispositif de protection pour un véhicule automobile selon le préambule de la revendication 1.

### Présentation de l'invention

Le but de l'invention est de fournir un dispositif de protection améliorant les dispositifs de protection connus de l'art antérieur.

Plus précisément, un premier objet de l'invention est un dispositif de protection permettant de minimiser d'une part les déformations de la barrière percutée et d'autre part les déformations du tablier, lors d'un test de type MPDB.

Un deuxième objet de l'invention est un dispositif de protection simple à fabriquer et pouvant être facilement intégré sur les véhicules existants.

### Résumé de l'invention

Selon l'invention, un dispositif de protection pour un véhicule automobile comprend une première traverse, une deuxième traverse et un moyen de liaison formant une liaison entre la première traverse et la deuxième traverse. Ledit moyen de liaison comprend au moins un montant fixé à la première traverse et à la deuxième traverse. La première traverse s'étend selon un premier axe. La deuxième traverse s'étend selon un deuxième axe parallèle au premier axe. La première traverse et la deuxième traverse sont destinées à être positionnées l'une au-dessus de l'autre et à l'avant d'un véhicule. Le premier axe et le deuxième axe sont destinés à être orientés parallèlement à un axe transversal d'un véhicule. Le montant s'étend selon un troisième axe destiné à être orienté parallèlement à un axe vertical d'un véhicule. Ledit moyen de liaison comprend au moins une zone fragile apte à se casser au cours d'une collision de type MPDB, pour casser la liaison entre la première traverse et la deuxième traverse.

Le moyen de liaison peut comprendre un premier montant fixé à la première traverse et à la deuxième traverse et un deuxième montant fixé à la première traverse et à la deuxième traverse. Le premier montant peut s'étendre selon un troisième axe destiné à être orienté parallèlement à un axe vertical d'un véhicule. Le deuxième montant peut s'étendre selon un quatrième axe parallèle au troisième axe. Le premier montant peut être fixé à une première extrémité latérale de la première traverse et à une première extrémité latérale de la deuxième traverse. Le deuxième montant peut être fixé à une deuxième extrémité latérale de la première traverse et à une deuxième extrémité latérale de la deuxième traverse.

L'au moins un montant comprend une première portion par laquelle il est fixé à la première traverse, une deuxième portion par laquelle il est fixé à la deuxième traverse et une troisième portion s'étendant entre la première portion et la deuxième portion. La troisième portion peut comprendre une plus grande résistance à la rupture que la première portion et/ou la troisième portion peut comprendre une plus grande résistance à la rupture que la deuxième portion, la zone fragile pouvant comprendre une interface entre la troisième portion et la première portion, et/ou la zone fragile pouvant comprendre une interface entre la troisième portion et la deuxième portion.

La première portion est constituée par une première languette s'étendant dans un premier plan et le premier plan peut être destiné à être orienté parallèlement à un axe transversal et à un axe vertical d'un véhicule et/ou la deuxième portion peut être constituée par une deuxième languette s'étendant dans un deuxième plan et le deuxième plan peut être destiné à être orienté parallèlement à un axe transversal et à un axe vertical d'un véhicule.

La troisième portion comprend une section perpendiculaire au troisième axe de forme rectangulaire ou la troisième portion peut comprendre une section perpendiculaire au troisième axe en forme de U. La troisième portion peut s'étendre dans un volume défini à l'aplomb de la première traverse et/ou de la deuxième traverse.

La première traverse peut comprendre une face avant, la face avant de la première traverse étant destinée à être orientée dans un plan transversal et vertical d'un véhicule, vers l'avant d'un véhicule, et la deuxième traverse peut comprendre une face avant, la face avant de la deuxième traverse étant destinée à être orientée dans un plan transversal et vertical d'un véhicule, vers l'avant d'un véhicule, l'au moins un montant pouvant être fixé à la face avant de la première traverse et à la face avant de la deuxième traverse.

L'au moins un montant peut être fixé à la première traverse uniquement par une première vis, la première vis passant au travers d'un premier trou de l'au moins un montant, et/ou l'au moins un montant peut être fixé à la deuxième traverse uniquement par une deuxième vis, la deuxième vis passant au travers d'un deuxième trou de l'au moins un montant. La zone fragile peut comprendre une interface entre le premier trou et la première vis et/ou la zone fragile peut comprendre une interface entre le deuxième trou et la deuxième vis.

Selon l'invention, une caisse pour un véhicule automobile comprend un berceau, deux longerons et un dispositif de protection défini précédemment, les deux longerons étant destinés à s'étendre parallèlement à un axe longitudinal d'un véhicule, chacun des deux longerons étant fixé par une extrémité avant au dispositif de protection, chacun des deux longerons étant fixé par une extrémité arrière au berceau.

Selon l'invention, un véhicule automobile comprend un dispositif de protection défini précédemment et/ou une caisse définie précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue schématique d'un véhicule automobile comprenant un dispositif de protection selon un mode de réalisation de l'invention.
[Fig. 2] La figure 2 est une vue isométrique en éclaté d'une partie avant de la caisse du véhicule.
[Fig. 3] La figure 3 est une vue isométrique d'une partie avant de la caisse du véhicule.
[Fig. 4] La figure 4 est une vue isométrique en éclaté du dispositif de protection.
[Fig. 5] La figure 5 est une vue en perspective d'un montant du dispositif de protection.
[Fig. 6A] La figure 6A est une vue en perspective de côté d'un dispositif de protection dépourvu d'une zone fragile selon l'invention, consécutivement à une collision de type MPDB.
[Fig. 6B] La figure 6B est une vue en perspective de côté d'un dispositif de protection selon un mode de réalisation de l'invention, consécutivement à une collision de type MPDB.
[Fig. 7A] La figure 7A est une vue de dessus d'un dispositif de protection dépourvu d'une zone fragile selon l'invention, consécutivement à une collision de type MPDB.
[Fig. 7B] La figure 7B est une vue de dessus d'un dispositif de protection selon un mode de réalisation de l'invention, consécutivement à une collision de type MPDB.
[Fig. 8A] La figure 8A est une vue de face d'un tablier d'un véhicule équipé d'un dispositif de protection dépourvu d'une zone fragile selon l'invention, consécutivement à une collision de type MPDB.
[Fig. 8B] La figure 8B est une vue de face d'un tablier d'un véhicule équipé d'un dispositif de protection selon un mode de réalisation de l'invention, consécutivement à une collision de type MPDB.

### Description détaillée

Dans ce document, l'axe X désigne l'axe longitudinal d'un véhicule. En marche avant et en ligne droite, le véhicule progresse de l'arrière vers l'avant selon une direction parallèle à son axe longitudinal. L'axe X est orienté de l'avant vers l'arrière du véhicule, c'est-à-dire dans le sens de la marche arrière. L'axe Y désigne l'axe transversal du véhicule. L'axe Y est orienté de la gauche vers la droite, la gauche et la droite étant définies selon le point de vue d'un conducteur du véhicule. L'axe Z désigne l'axe perpendiculaire à l'axe X et à l'axe Y. L'axe Z est un axe vertical lorsque le véhicule repose sur un sol horizontal. L'axe Z est orienté de bas en haut. Les axes X, Y et Z forment un repère orthogonal. Ce même repère, défini par référence à un véhicule, sera aussi utilisé pour un dispositif de protection, même considéré hors d'un véhicule, puisqu'il est destiné à un montage selon une orientation spécifique sur un véhicule. De plus, on considère que le véhicule repose sur un sol horizontal.

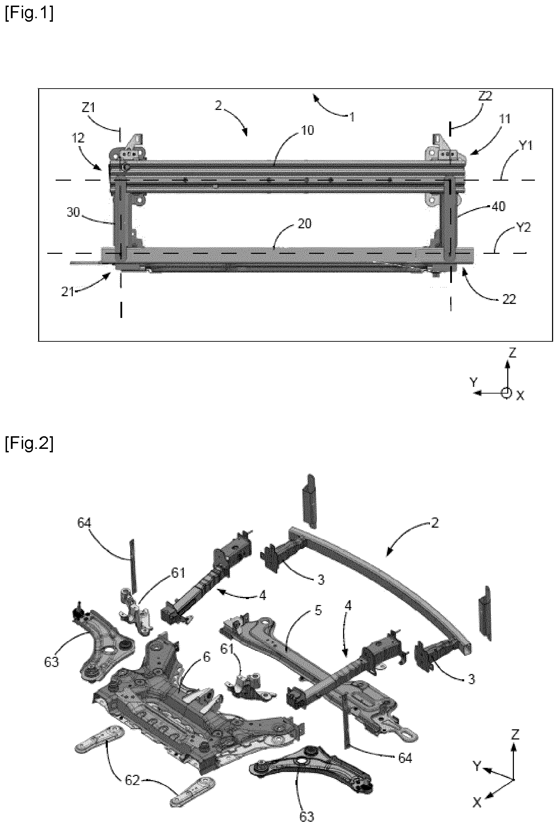

La figure 1 illustre schématiquement un véhicule 1 automobile équipé d'un dispositif de protection 2 selon un mode de réalisation de l'invention. Le véhicule 1 peut être de toute nature. Notamment, il peut être par exemple un véhicule particulier, un véhicule utilitaire, un camion ou un bus.

Le dispositif de protection 2 est une structure rigide formant une partie avant d'une caisse du véhicule. Le dispositif de protection peut constituer la partie de la caisse la plus à l'avant du véhicule, c'est-à-dire la partie de caisse qui serait percutée en premier en cas de choc à l'avant du véhicule. Le dispositif de protection peut être masqué par une carrosserie du véhicule, une calandre, un parechoc, un capot ou encore tout autre composant d'habillage du véhicule. Le dispositif de protection 2 comprend une première traverse 10, une deuxième traverse 20, un premier montant 30 fixé à la première traverse et à la deuxième traverse et un deuxième montant 40 fixé à la première traverse et à la deuxième traverse. Les deux traverses 10, 20 et les deux montants 30, 40 sont des éléments distincts et monoblocs fixés rigidement ensemble lors de la fabrication du dispositif de protection.

La première traverse s'étend selon un premier axe Y1 parallèle à l'axe transversal Y du véhicule. La deuxième traverse s'étend selon un deuxième axe Y2 parallèle au premier axe Y1. La première traverse et la deuxième traverse sont positionnées l'une au-dessus de l'autre et à l'avant du véhicule 1. La première traverse 10 est une traverse supérieure et la deuxième traverse 20 est une traverse inférieure. La traverse supérieure est positionnée verticalement au-dessus de la traverse inférieure ou autrement dit à l'aplomb de la traverse inférieure. La première traverse peut également être légèrement décalée vers l'avant ou vers l'arrière par rapport à la deuxième traverse. On peut considérer par exemple que les deux traverses sont positionnées l'une au-dessus de l'autre à partir du moment où il existe un plan vertical et transversal passant par au moins un point de la première traverse et par au moins un point de la deuxième traverse. Le premier montant s'étend selon un troisième axe Z1 orienté parallèlement à l'axe vertical Z. Le deuxième montant s'étendant selon un quatrième axe Z2 parallèle au troisième axe Z1, et donc également orienté verticalement. Les axes Y1 et Y2 peuvent ne pas être parfaitement parallèles à l'axe transversal Y et de même, les axes Z1 et Z2 peuvent ne pas être parfaitement parallèles à l'axe vertical Z. D'une manière générale, dans ce document, les termes "perpendiculaire" et "parallèle" ne devraient pas être interprétés rigoureusement mais plutôt comme "sensiblement perpendiculaire" et respectivement "sensiblement parallèle".

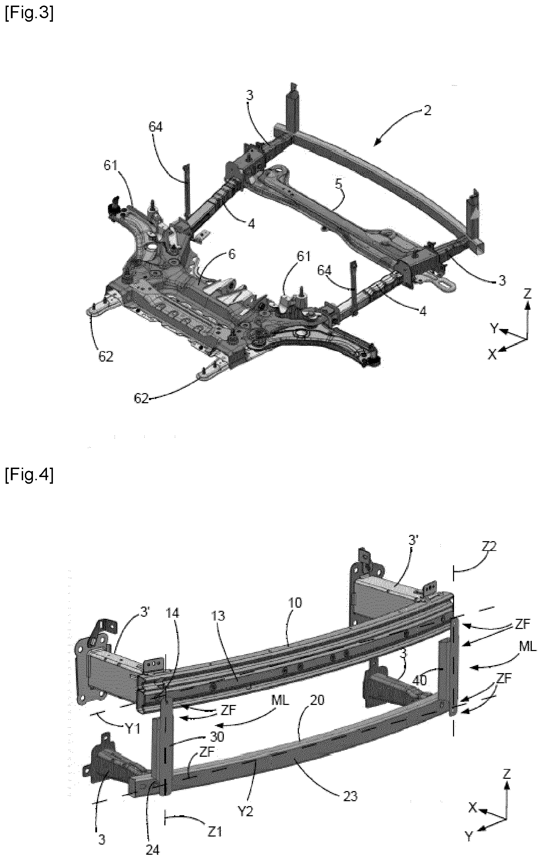

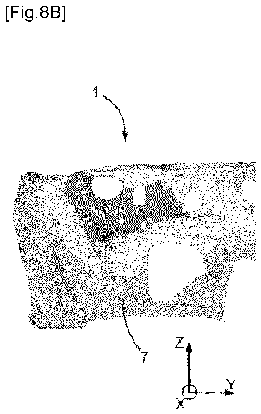

La traverse inférieure ou deuxième traverse 20 peut être positionnée environ à hauteur d'axes de rotation des roues avant du véhicule 1. La traverse supérieure ou première traverse 10 peut être positionné à une hauteur juste inférieure à la hauteur de projecteurs avant du véhicule. Cette position peut également correspondre à la hauteur de suspensions du véhicule. Les figures 2 et 3 permettent de bien visualiser la position du dispositif de protection 2 au sein de la caisse du véhicule 1. Sur ces deux figures la traverse supérieure n'est pas représentée afin de mieux visualiser les autres éléments de la caisse du véhicule. Le dispositif de protection 2 est raccordé aux autres éléments de la caisse par l'intermédiaire de deux bras longitudinaux 3 s'étendant sensiblement parallèlement à l'axe longitudinal X. Les deux bras longitudinaux sont reliés chacun à des longerons 4 s'étendant également sensiblement parallèlement à l'axe longitudinal X. Les deux longerons 4 sont reliés l'un à l'autre par une traverse sous radiateur 5 qui est un élément de caisse s'étendant sensiblement parallèlement à l'axe transversal Y sous un radiateur du véhicule 1. Les deux longerons 4 sont reliés à l'arrière à un berceau 6 du véhicule. Le berceau 6 est un support pour un moteur du véhicule, positionné sous le moteur. D'autres éléments de caisses peuvent être fixés sur le berceau comme notamment des supports de biellette de direction 61, des tirants longitudinaux 62 et des bras inférieurs 63. Un tirant vertical 64 est également fixé à chacun des longerons 4. Chacun des deux longerons 4 est fixé par une extrémité avant au dispositif de protection 2, et fixé par une extrémité arrière au berceau 6. En outre, le véhicule 1 comprend un tablier 7 qui est une cloison de séparation entre le compartiment moteur, où se situent notamment les éléments 2, 3, 4, 5, 6, 61, 62, 63, 64, et un habitacle du véhicule. Le tablier 7 (uniquement représenté sur la figure 8B) peut être fixé via des éléments de caisse au dispositif de protection 2. Les différents éléments de caisse 2, 3, 4, 5, 6, 7, 61, 62, 63, 64 décrits précédemment sont avantageusement des éléments métalliques et distincts les uns des autres. Ils sont fixés rigidement ensemble par exemple par vissage ou par soudure.

Nous allons à présent décrire plus en détail le dispositif de protection 2 en référence à la figure 4.

La première traverse 10 peut être globalement rectiligne selon l'axe transversal Y ou elle peut avoir une forme courbe comme cela est bien visible sur les figures 2, 3 et 4. La forme courbe de la première traverse permet d'épouser la silhouette du véhicule. La deuxième traverse peut avoir une forme identique ou similaire à la deuxième traverse. Avantageusement la deuxième traverse comprend une longueur proche ou identique à la longueur de la première traverse suivant l'axe transversal et une courbure identique à la première traverse.

La première traverse 10 et la deuxième traverse 20 peuvent se présenter sous la forme d'une poutre métallique et leur section peuvent être sensiblement constante. La première traverse à une section selon un plan perpendiculaire à l'axe Y1 qui est en forme de 8. La deuxième traverse à une section selon un plan perpendiculaire à l'axe Y2 qui est de forme rectangulaire. En variante, chacune de ces deux sections pourrait avoir une forme différente, par exemple une section section de forme carrée ou encore une section en forme de C.

La première traverse et la deuxième traverse peuvent avoir une hauteur suivant l'axe vertical Z sensiblement identique ou différente. Comme cela est le cas dans le mode de réalisation présenté, la première traverse 10 a une hauteur supérieure à la deuxième traverse. La première traverse 10 comprend donc une rigidité supérieure à la deuxième traverse. Ainsi, en considérant isolément la première traverse et la deuxième traverse et en considérant une contrainte identique appliquée parallèlement à l'axe longitudinal X sur le centre de la première traverse et sur le centre de la deuxième traverse, la première traverse se déformerait moins vers l'arrière du véhicule que la deuxième traverse.

La première traverse 10 comprend une première extrémité 11 et une deuxième extrémité 12 opposée à la première extrémité 11. La première extrémité 11 est une extrémité latérale gauche et la deuxième extrémité 12 est une extrémité latérale droite. De même, la deuxième traverse 20 comprend une première extrémité 21 et une deuxième extrémité 22 opposée à la première extrémité 21. La première extrémité 21 est une extrémité latérale gauche et la deuxième extrémité 22 est une extrémité latérale droite. Les extrémités des traverses désignent des zones des traverses positionnées à proximité de leurs bords latéraux. Notamment, l'extrémité d'une traverse peut être définie comme une zone de quelques centimètres ou de quelques dizaines de centimètres s'étendant le long de la traverse depuis le bord considéré.

En outre, la première traverse 10 et la deuxième traverse 20 comprennent toutes les deux une face avant 13, 23 orientée vers l'avant du véhicule. Cette face avant s'étend globalement verticalement et transversalement. Les faces avant 13, 23 peuvent être courbées vers l'arrière pour épouser la silhouette du véhicule. Une telle courbure confère également une résistance des traverses plus importante lorsqu'on leur applique un effort longitudinal au niveau de leur centre.

Le premier montant 30 est fixé à la première extrémité latérale 11 de la première traverse et à la première extrémité latérale 21 de la deuxième traverse. De même, le deuxième montant 40 est fixé à la deuxième extrémité latérale 12 de la première traverse et à la deuxième extrémité latérale 22 de la deuxième traverse. Le premier montant peut avoir une forme identique ou symétrique à la forme du deuxième montant. Les deux traverses et les deux montants forment les quatre côtés d'un rectangle dont le grand côté est horizontal et le petit côté est vertical. Une distance non nulle sépare la première traverse de la deuxième traverse. De même, une distance non nulle sépare le premier montant du deuxième montant. En variante, le dispositif de protection pourrait comprendre un seul montant vertical, par exemple agencé sensiblement au milieu de la première traverse et de la deuxième traverse. Ou bien le dispositif de protection pourrait comprendre trois ou encore davantage de montants répartis sur la largeur du dispositif de protection. Les montants 30, 40 constituent un moyen de liaison ML entre la première traverse 10 et la deuxième traverse 20. Le moyen de liaison ML forme une liaison rigide entre la première traverse et la deuxième traverse.

Le moyen de liaison ML comprend au moins une zone fragile ZF apte à se casser au cours d'une collision de type MPDB, pour casser la liaison rigide entre la première traverse et la deuxième traverse. Lorsque la liaison rigide formée par le moyen de liaison ML est cassée, la première traverse et la deuxième traverse sont désolidarisées : elles ne sont plus mécaniquement liées entre elles par l'intermédiaire des montants. Elles peuvent toutefois demeurer liées entre elles par l'intermédiaire de bras longitudinaux 3, 3' (illustrés sur la figure 4), eux-mêmes raccordés directement ou indirectement à un même élément de caisse. Une telle rupture de la liaison entre la première traverse et la deuxième traverse peut être obtenue notamment par la rupture des montants ou par la rupture de la fixation entre les montants et les traverses. Les traverses, quant à elles, ont une rigidité telle qu'elles plient sans se casser consécutivement à une collision de type MPDB.

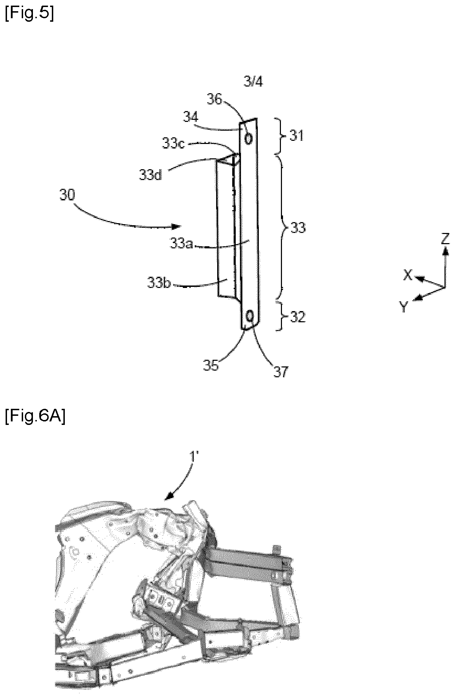

On s'attachera par la suite à décrire le premier montant 30, en référence à la figure 5, le deuxième montant 40 étant identique au premier montant. Le montant 30 comprend une première portion 31 par laquelle il est fixé à la première traverse 10, une deuxième portion 32 par laquelle il est fixé à la deuxième traverse 20, et une troisième portion 33 s'étendant entre la première portion 31 et la deuxième portion 32. La troisième portion 33 s'étend également entre la première traverse 10 et la deuxième traverse 20. La troisième portion 33 comprend une plus grande résistance à la rupture (ou autrement dit une plus grande solidité ou rigidité) que la première portion 31, et que la deuxième portion 32. Ainsi, lorsqu'une contrainte de cisaillement suffisante est appliquée sur le montant entre la première portion 31 et la troisième portion 33 ou entre la deuxième portion 32 et la troisième portion 33, celui-ci casse respectivement soit à l'interface entre la troisième portion et la première portion, soit à l'interface entre la troisième portion et la deuxième portion. Ainsi la zone fragile ZF comprend à la fois l'interface entre la troisième portion et la première portion et l'interface entre la troisième portion et la deuxième portion. En variante, seulement l'une de ces deux interfaces pourrait constituer une zone de fragilité du montant.

La première portion 31 est constituée par une première languette 34 s'étendant dans un premier plan Y1Z1, le premier plan comprenant les axes Y1 et Z1. La deuxième portion 32 est constituée par une deuxième languette 35 s'étendant dans un deuxième plan Y2Z1, le deuxième plan comprenant les axes Y2 et Z1. Le deuxième plan Y2Z1 est donc confondu avec le premier plan Y1Z1.

La troisième portion 33 comprend une section perpendiculaire au troisième axe Z1 de forme rectangulaire. C'est-à-dire que la troisième portion comprend une forme globalement parallélépipédique. La troisième portion comprend donc une première face 33a tournée vers l'avant du véhicule, une deuxième face 33b tournée vers la droite, une troisième face 33c tournée vers la gauche, et enfin une quatrième face 33d tournée vers l'arrière. La première face 33a s'étend dans le même plan que les deux languettes 34 et 35. En variante, la troisième portion 33 pourrait comprendre par exemple une section perpendiculaire au troisième axe en forme de U, notamment elle pourrait comprendre uniquement les faces 33a, 33b et 33c précédemment citées. En variante, la troisième portion pourrait avoir une section encore différente pourvue qu'elle ait une résistance à la rupture supérieure à celle des languettes 34, 35. On obtient ainsi une rupture d'inertie du montant qui favorise une rupture à l'interface entre la troisième portion 33 et la première portion 31 ou entre la troisième portion 33 et la deuxième portion 32. Ainsi, on maîtrise le lieu de la rupture du montant et la déformation de la caisse au cours d'une collision est davantage répétable.

Le montant 30 peut être fabriqué en pliant et en découpant une feuille d'acier. Le montant 30 pourrait également être fabriqué en découpant un tube en acier selon une découpe qui permet de dégager les languettes 34 et 35. Avantageusement, lorsque la troisième portion 33 comprend une section en U, la fabrication du montant 30 est facilitée puisqu'il suffit de plier à 90° les deux faces 33c et 33b par rapport à la face avant 33a. De plus, un tel profil est plus léger et requiert moins de matière.

Le montant 30 est fixé par l'intermédiaire de la première languette 34 à la face avant 13 de la première traverse 10, et par l'intermédiaire de la deuxième languette 35 à la face 23 avant de la deuxième traverse 20. A cet effet la première languette 34 comprend un premier trou 36 et la deuxième languette 35 comprend un deuxième trou 37. La première traverse comprend également un premier trou 14 et la deuxième traverse comprend également un deuxième trou 24 coïncidant respectivement avec les trous 36 et 37. Le dispositif de protection 2 comprend en outre une première vis (non représentée) passant au travers des trous 36 et 14 et une deuxième vis (non représentée) passant au travers des trous 37 et 24. En remarque, le deuxième trou 37 peut être oblong dans le sens vertical afin de faciliter la fixation du montant en tenant compte des dispersions de fabrication.

Le montant 30 est donc fixé à la première traverse par une unique vis et de même, il est fixé à la deuxième traverse par une unique vis. Ainsi la liaison obtenue entre le montant et les deux traverses 10, 20 peut se casser au cours d'une collision de type MPDB. Plus particulièrement, les vis de fixation peuvent être éjectées ou bien la matière formant une languette peut être déchirée depuis le trou 36, 37 jusqu'au bord de la languette. La zone fragile ZF comprend donc l'interface entre le premier trou 36 et la première vis, et l'interface entre le deuxième trou 37 et la deuxième vis.

Par conséquent, pour un montant donné, la zone fragile ZF comprend quatre interfaces distinctes que sont : l'interface entre la troisième portion 33 et la première portion 31, l'interface entre la troisième portion 33 et la deuxième portion 32, l'interface entre le premier trou 36 et la première vis, et enfin l'interface entre le deuxième trou 37 et la deuxième vis. Il existe donc quatre modes de rupture possible de liaison entre la première traverse et la deuxième traverse. On s'assure ainsi, en dépit des tolérances de fabrication, que la liaison sera bel et bien rompue au cours d'une collision de type MPDB.

La troisième portion 33 du montant s'étend dans un volume défini à l'aplomb de la première traverse 10 et de la deuxième traverse 30. Autrement dit, la troisième portion 33 n'est pas saillante vers l'avant ou vers l'arrière par rapport aux deux traverses. L'intégration des deux montants n'augmente donc pas l'encombrement ou le volume nécessaire pour la caisse. Les montants 30, 40 peuvent donc être mis en place sur des véhicules existants sans modification de la silhouette du véhicule.

Comme expliqué précédemment, une collision de type MPDB, est une collision durant laquelle le véhicule 1 percute frontalement une barrière déportée sur un côté du véhicule. Notamment une telle collision peut être obtenue avec une barrière de construction normalisée propulsée à 50km/h percutant l'avant du véhicule se déplaçant également à 50km/h dans le sens opposé. Le taux de recouvrement (défini comme une proportion de la largeur du véhicule en vis à vis de la barrière) peut être établi à une valeur de l'ordre de 50%. Les zones fragiles ZF sont définies pour que la liaison rigide entre la première traverse et la deuxième traverse se casse au cours de la collision de type MPDB. La collision peut donc être décomposée en deux phases. Lors d'une première phase les deux traverses 10, 20 sont liées entre elles par l'intermédiaire des deux montants 30, 40. La déformation et le déplacement vers l'arrière du véhicule des deux traverses sont donc synchronisés, même si les deux traverses ont une rigidité différente ou subissent une force différente. Notamment, bien que la rigidité de la première traverse soit supérieure à la rigidité de la deuxième traverse (en raison notamment de sa hauteur plus importante), la déformation et le déplacement de la première traverse sont synchronisés avec ceux de la deuxième traverse. Tant que les déformations et les déplacements des deux traverses sont synchronisées, l'effort de la barrière sur la caisse du véhicule est réparti sur les deux traverses ce qui permet de limiter l'amplitude des déformations à la fois de la barrière percutée et du véhicule 1. De plus, le dispositif de protection entre en contact avec la barrière par les faces avant 13 et 23 des deux traverses et par les faces avant 33a prolongées par les deux languettes 34, 35. Ces surfaces sont planes et orientées dans le plan transversal et vertical. Elles permettent donc de répartir les efforts de la barrière sur une surface importante, ce qui limite les risques de déchirure de la barrière.

Puis, au cours de la collision les zones fragiles se rompent ou se cassent. Cette rupture permet déjà d'absorber une partie de l'énergie de la collision.

La deuxième phase de la collision commence suite à cette rupture. Les deux traverses ne sont plus liées entre elles. Leur déformation et leur déplacement ne sont donc plus synchronisés. En désynchronisant la déformation de la première traverse et de la deuxième traverse on limite la transmission de l'énergie du choc vers l'arrière de la caisse et donc vers l'habitacle où se trouve les passagers.

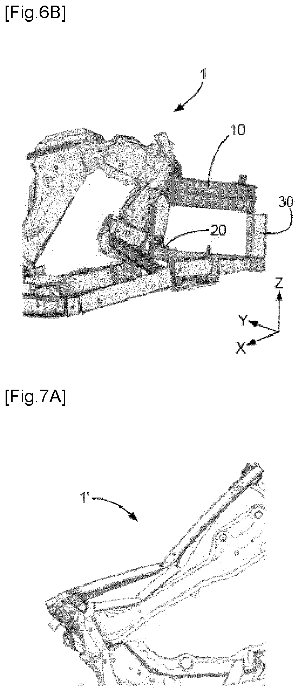

Les figures 6A, 6B, 7A, 7B, 8A, 8B illustrent les résultats d'une simulation numérique comparative de la déformation d'un train avant de deux véhicules 1', 1 consécutivement à un choc de type MPDB. Sur les figures 6A, 7A et 8A, on observe les déformations obtenues par un deuxième véhicule 1' qui n'est pas réalisé selon l'invention. Sur les figures 6B, 7B et 8B, on observe les déformations obtenues par le véhicule 1 qui est un véhicule selon un mode de réalisation de l'invention. Le deuxième véhicule 1' se distingue du véhicule 1 en ce qu'il ne comprend pas de zone fragile. La première traverse et la deuxième traverse du deuxième véhicule demeurent donc liées l'une à l'autre par des montants tout au long de la collision.

En comparant les figures 6A et 6B, on observe que le montant 30 s'est désolidarisé de la première traverse 30 mais est restée fixée à la deuxième traverse. Bien que le montant 30 comprenne plusieurs interfaces susceptibles de se casser, dès qu'une première interface casse, les contraintes appliquées sur le montant 30 diminuent et les autres interfaces peuvent être préservées. Ainsi on évite que le montant se désolidarise complètement du véhicule et constitue un projectile qui pourrait créer des dommages.

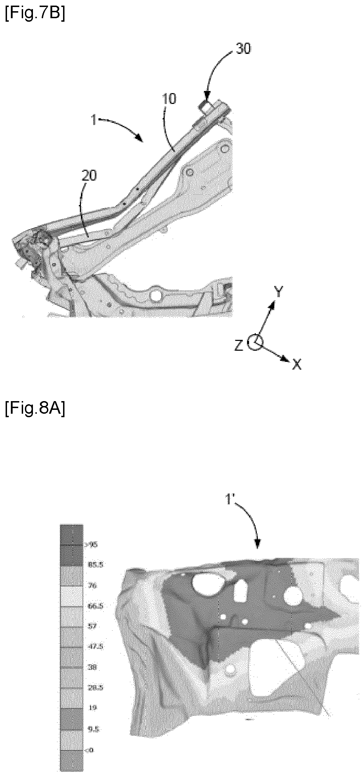

En comparant les figures 7A et 7B, on observe que les deux traverses 10 20 ont subi des déformations davantage divergentes lorsque le montant 30 s'est désolidarisé de la première traverse 10. En désynchronisant la déformation de la première traverse et de la deuxième traverse on évite de cisailler ou de poinçonner la barrière entre les deux traverses. La barrière est donc davantage préservée. En situation réelle, le véhicule percuté subi un endommagement moindre.

Enfin, les figures 8A et 8B permettent de comparer les déformations du tablier 8 obtenues. Sur ces deux figures, une zone sombre ZS indique la zone du tablier ayant subi une déformation en direction des pieds d'un utilisateur du véhicule supérieure à une valeur donnée. Cette zone sombre ZS a une taille bien supérieure pour le deuxième véhicule 1' (figure 8A) que pour le véhicule selon un mode de réalisation de l'invention (figure 8B). Les déformations du tablier sont donc moindre grâce à l'invention. Le risque de blesser les jambes du conducteur ou du passager est donc plus faible.

## Revendications

1. Dispositif de protection (2) pour un véhicule (1) automobile comprenant une première traverse (10), une deuxième traverse (20) et un moyen de liaison (ML) formant une liaison entre la première traverse et la deuxième traverse, ledit moyen de liaison comprenant au moins un montant (30) fixé à la première traverse et à la deuxième traverse, la première traverse s'étendant selon un premier axe (Y1), la deuxième traverse s'étendant selon un deuxième axe (Y2) parallèle au premier axe, la première traverse et la deuxième traverse étant destinées à être positionnées l'une au-dessus de l'autre et à l'avant d'un véhicule, le premier axe et le deuxième axe étant destinés à être orientés parallèlement à un axe transversal (Y) d'un véhicule, le montant s'étendant selon un troisième axe (Z1) destiné à être orienté parallèlement à un axe vertical (Z) d'un véhicule, ledit moyen de liaison comprenant au moins une zone fragile (ZF) apte à se casser au cours d'une collision de type MPDB, pour casser la liaison entre la première traverse et la deuxième traverse, l'au moins un montant (30) comprenant une première portion (31) par laquelle il est fixé à la première traverse, une deuxième portion (32) par laquelle il est fixé à la deuxième traverse, et une troisième portion (33) s'étendant entre la première portion et la deuxième portion, la troisième portion comprenant une plus grande résistance à la rupture que la première portion, et/ou la troisième portion comprenant une plus grande résistance à la rupture que la deuxième portion, la zone fragile (ZF) comprenant une interface entre la troisième portion et la première portion, et/ou la zone fragile (ZF) comprenant une interface entre la troisième portion et la deuxième portion, la première portion (31) étant constituée par une première languette (34) s'étendant dans un premier plan (Y1Z1), le premier plan étant destiné à être orienté parallèlement à un axe transversal et à un axe vertical d'un véhicule, et/ou la deuxième portion (32) étant constituée par une deuxième languette (35) s'étendant dans un deuxième plan (Y2Z1), le deuxième plan étant destiné à être orienté parallèlement à un axe transversal et à un axe vertical d'un véhicule, **caractérisé en ce que** la troisième portion (33) comprend une section perpendiculaire au troisième axe (Z1) de forme rectangulaire, ou **en ce que** la troisième portion (33) comprend une section perpendiculaire au troisième axe (Z1) en forme de U.

2. Dispositif de protection (2) selon la revendication précédente, **caractérisé en ce que** le moyen de liaison (ML) comprend un premier montant (30) fixé à la première traverse et à la deuxième traverse et un deuxième montant (40) fixé à la première traverse et à la deuxième traverse, le premier montant s'étendant selon un troisième axe (Z1) destiné à être orienté parallèlement à un axe vertical (Z) d'un véhicule, le deuxième montant s'étendant selon un quatrième axe (Z2) parallèle au troisième axe, le premier montant étant fixé à une première extrémité latérale (11) de la première traverse et à une première extrémité latérale (21) de la deuxième traverse, le deuxième montant étant fixé à une deuxième extrémité latérale (12) de la première traverse et à une deuxième extrémité latérale (22) de la deuxième traverse.

3. Dispositif de protection (2) selon l'une des revendications précédentes, **caractérisé en ce que** la troisième portion (33) s'étend dans un volume défini à l'aplomb de la première traverse et/ou de la deuxième traverse.

4. Dispositif de protection (2) selon l'une des revendications précédentes, **caractérisé en ce que** la première traverse comprend une face avant (13), la face avant de la première traverse étant destinée à être orientée dans un plan transversal et vertical d'un véhicule, vers l'avant d'un véhicule, et **en ce que** la deuxième traverse comprend une face avant (23), la face avant de la deuxième traverse étant destinée à être orientée dans un plan transversal et vertical d'un véhicule, vers l'avant d'un véhicule, l'au moins un montant étant fixé à la face avant de la première traverse et à la face avant de la deuxième traverse.

5. Dispositif de protection (2) selon l'une des revendications précédentes, **caractérisé en ce que** l'au moins un montant est fixé à la première traverse uniquement par une première vis, la première vis passant au travers d'un premier trou (36) de l'au moins un montant, et/ou **en ce que** l'au moins un montant est fixé à la deuxième traverse uniquement par une deuxième vis, la deuxième vis passant au travers d'un deuxième trou (37) de l'au moins un montant, la zone fragile (ZF) comprenant une interface entre le premier trou et la première vis, et/ou la zone fragile (ZF) comprenant une interface entre le deuxième trou et la deuxième vis.

6. Caisse pour un véhicule (1) automobile, **caractérisée en ce qu'**elle comprend un berceau (6), deux longerons (4) et un dispositif de protection (2) selon l'une des revendications précédentes, les deux longerons (4) étant destinés à s'étendre parallèlement à un axe longitudinal (X) d'un véhicule, chacun des deux longerons étant fixé par une extrémité avant au dispositif de protection, chacun des deux longerons étant fixé par une extrémité arrière au berceau.

7. Véhicule (1) automobile, **caractérisé en ce qu'**il comprend un dispositif de protection (2) selon l'une des revendications 1 à 5 et/ou une caisse selon la revendication précédente.

## Patentansprüche

1. Schutzvorrichtung (2) für ein Kraftfahrzeug (1), umfassend einen ersten Querträger (10), einen zweiten Querträger (20) und ein Verbindungsmittel (ML), das eine Verbindung zwischen dem ersten Querträger und dem zweiten Querträger bildet, wobei das Verbindungsmittel mindestens einen Pfosten (30) umfasst, der am ersten Querträger und am zweiten Querträger befestigt ist, wobei sich der erste Querträger entlang einer ersten Achse (Y1) erstreckt, wobei sich der zweite Querträger entlang einer zur ersten Achse parallelen zweiten Achse (Y2) erstreckt, wobei der erste Querträger und der zweite Querträger dazu bestimmt sind, übereinander und an der Vorderseite eines Fahrzeugs positioniert zu sein, wobei die erste Achse und die zweite Achse dazu bestimmt sind, parallel zu einer Querachse (Y) eines Fahrzeugs ausgerichtet zu sein, wobei sich der Pfosten entlang einer dritten Achse (Z1) erstreckt, die dazu bestimmt ist, parallel zu einer vertikalen Achse (Z) eines Fahrzeugs ausgerichtet zu sein, wobei das Verbindungsmittel mindestens einen zerbrechlichen Bereich (ZF) umfasst, der geeignet ist, bei einer Kollision mit einem mobilen progressiven verformbaren Hindernis (MPDB) zu brechen, um die Verbindung zwischen dem ersten Querträger und dem zweiten Querträger zu zerstören, wobei der mindestens eine Pfosten (30) einen ersten Abschnitt (31), mit dem er am ersten Querträger befestigt ist, einen zweiten Abschnitt (32), mit dem er am zweiten Querträger befestigt ist, und einen dritten Abschnitt (33), der sich zwischen dem ersten Abschnitt und dem zweiten Abschnitt erstreckt, umfasst, wobei der dritte Abschnitt eine größere Bruchfestigkeit als der erste Abschnitt aufweist und/oder der dritte Abschnitt eine größere Bruchfestigkeit als der zweite Abschnitt aufweist, wobei der zerbrechliche Bereich (ZF) eine Grenzfläche zwischen dem dritten Abschnitt und dem ersten Abschnitt umfasst und/oder der zerbrechliche Bereich (ZF) eine Grenzfläche zwischen dem dritten Abschnitt und dem zweiten Abschnitt umfasst, wobei der erste Abschnitt (31) durch eine erste Zunge (34) gebildet wird, die sich in einer ersten Ebene (Y1Z1) erstreckt, wobei die erste Ebene dazu bestimmt ist, parallel zu einer Querachse und zu einer vertikalen Achse eines Fahrzeugs ausgerichtet zu sein, und/oder wobei der zweite Abschnitt (32) durch eine zweite Zunge (35) gebildet wird, die sich in einer zweiten Ebene (Y2Z1) erstreckt, wobei die zweite Ebene dazu bestimmt ist, parallel zu einer Querachse und zu einer vertikalen Achse eines Fahrzeugs ausgerichtet zu sein,
**dadurch gekennzeichnet, dass** der dritte Abschnitt (33) einen zur dritten Achse (Z1) senkrechten Abschnitt mit rechteckiger Form umfasst oder dass der dritte Abschnitt (33) einen zur dritten Achse (Z1) senkrechten Abschnitt mit U-Form umfasst.

2. Schutzvorrichtung (2) nach dem vorangehenden Anspruch, **dadurch gekennzeichnet, dass** das Verbindungsmittel (ML) einen am ersten Querträger und am zweiten Querträger befestigten ersten Pfosten (30) und einen am ersten Querträger und am zweiten Querträger befestigten zweiten Pfosten (40) umfasst, wobei sich der erste Pfosten entlang einer dritten Achse (Z1) erstreckt, die dazu bestimmt ist, parallel zu einer vertikalen Achse (Z) eines Fahrzeugs ausgerichtet zu sein, wobei sich der zweite Pfosten entlang einer zur dritten Achse parallelen vierten Achse (Z2) erstreckt, wobei der erste Pfosten an einem ersten seitlichen Ende (11) des ersten Querträgers und an einem ersten seitlichen Ende (21) des zweiten Querträgers befestigt ist, wobei der zweite Pfosten an einem zweiten seitlichen Ende (12) des ersten Querträgers und an einem zweiten seitlichen Ende (22) des zweiten Querträgers befestigt ist.

3. Schutzvorrichtung (2) nach einem der vorangehenden Ansprüche, **dadurch gekennzeichnet, dass** sich der dritte Abschnitt (33) in einem Volumen erstreckt, das lotrecht zum ersten Querträger und/oder zum zweiten Querträger definiert ist.

4. Schutzvorrichtung (2) nach einem der vorangehenden Ansprüche, **dadurch gekennzeichnet, dass** der erste Querträger eine vordere Seite (13) umfasst, wobei die vordere Seite des ersten Querträgers dazu bestimmt ist, in einer Quer- und Vertikalebene eines Fahrzeugs zur Vorderseite eines Fahrzeugs hin ausgerichtet zu sein, und dass der zweite Querträger eine vordere Seite (23) umfasst, wobei die vordere Seite des zweiten Querträgers dazu bestimmt ist, in einer Quer- und Vertikalebene eines Fahrzeugs zur Vorderseite eines Fahrzeugs hin ausgerichtet zu sein, wobei der mindestens eine Pfosten an der vorderen Seite des ersten Querträgers und an der vorderen Seite des zweiten Querträgers befestigt ist.

5. Schutzvorrichtung (2) nach einem der vorangehenden Ansprüche, **dadurch gekennzeichnet, dass** der mindestens eine Pfosten nur durch eine erste Schraube am ersten Querträger befestigt ist, wobei die erste Schraube durch ein erstes Loch (36) des mindestens einen Pfostens verläuft, und/oder dass der mindestens eine Pfosten nur durch eine zweite Schraube am zweiten Querträger befestigt ist, wobei die zweite Schraube durch ein zweites Loch (37) des mindestens einen Pfostens verläuft, wobei der zerbrechliche Bereich (ZF) eine Grenzfläche zwischen dem ersten Loch und der ersten Schraube umfasst und/oder wobei der zerbrechliche Bereich (ZF) eine Grenzfläche zwischen dem zweiten Loch und der zweiten Schraube umfasst.

6. Karosserie für ein Kraftfahrzeug (1), **dadurch gekennzeichnet, dass** sie ein Gestell (6), zwei Längsträger (4) und eine Schutzvorrichtung (2) nach einem der vorangehenden Ansprüche umfasst, wobei die beiden Längsträger (4) dazu bestimmt sind, sich parallel zu einer Längsachse (X) eines Fahrzeugs zu erstrecken, wobei jeder der beiden Längsträger mit einem vorderen Ende an der Schutzvorrichtung befestigt ist, wobei jeder der beiden Längsträger mit einem hinteren Ende am Gestell befestigt ist.

7. Kraftfahrzeug (1), **dadurch gekennzeichnet, dass** es eine Schutzvorrichtung (2) nach einem der Ansprüche 1 bis 5 und/oder eine Karosserie nach dem vorangehenden Anspruch umfasst.

## Claims

1. Protection device (2) for a motor vehicle (1), comprising a first crossmember (10), a second crossmember (20) and a connecting means (ML) forming a connection between the first crossmember and the second crossmember, said connecting means comprising at least one upright (30) fastened to the first crossmember and to the second crossmember, the first crossmember extending along a first axis (Y1), the second crossmember extending along a second axis (Y2) parallel to the first axis, the first crossmember and the second crossmember being intended to be positioned one above the other and at the front of a vehicle, the first axis and the second axis being intended to be oriented parallel to a transverse axis (Y) of a vehicle, the upright extending along a third axis (Z1) intended to be oriented parallel to a vertical axis (Z) of a vehicle, said connecting means comprising at least one fragile zone (ZF) that is able to break during a collision of MPDB type, so as to break the connection between the first crossmember and the second crossmember, the at least one upright (30) comprising a first portion (31) via which it is fastened to the first crossmember, a second portion (32) via which it is fastened to the second crossmember, and a third portion (33) extending between the first portion and the second portion, the third portion having a greater breaking strength than the first portion, and/or the third portion having a greater breaking strength than the second portion, the fragile zone (ZF) comprising an interface between the third portion and the first portion, and/or the fragile zone (ZF) comprising an interface between the third portion and the second portion, the first portion (31) being constituted by a first tongue (34) extending in a first plane (Y1Z1), the first plane being intended to be oriented parallel to a transverse axis and to a vertical axis of a vehicle, and/or the second portion (32) being constituted by a second tongue (35) extending in a second plane (Y2Z1), the second plane being intended to be oriented parallel to a transverse axis and to a vertical axis of a vehicle, **characterized in that** the third portion (33) has a section perpendicular to the third axis (Z1) that is of rectangular shape, or **in that** the third portion (33) has a section perpendicular to the third axis (Z1) that is U-shaped.

2. Protection device (2) according to the preceding claim, **characterized in that** the connecting means (ML) comprises a first upright (30) fastened to the first crossmember and to the second crossmember and a second upright (40) fastened to the first crossmember and to the second crossmember, the first upright extending along a third axis (Z1) intended to be oriented parallel to a vertical axis (Z) of a vehicle, the second upright extending along a fourth axis (Z2) parallel to the third axis, the first upright being fastened to a first lateral end (11) of the first crossmember and to a first lateral end (21) of the second crossmember, the second upright being fastened to a second lateral end (12) of the first crossmember and to a second lateral end (22) of the second crossmember.

3. Protection device (2) according to either of the preceding claims, **characterized in that** the third portion (33) extends in a volume defined vertically in line with the first crossmember and/or the second crossmember.

4. Protection device (2) according to one of the preceding claims, **characterized in that** the first crossmember comprises a front face (13), the front face of the first crossmember being intended to be oriented in a transverse and vertical plane of a vehicle, towards the front of a vehicle, and **in that** the second crossmember comprises a front face (23), the front face of the second crossmember being intended to be oriented in a transverse and vertical plane of a vehicle, towards the front of a vehicle, the at least one upright being fastened to the front face of the first crossmember and to the front face of the second crossmember.

5. Protection device (2) according to one of the preceding claims, **characterized in that** the at least one upright is fastened to the first crossmember only by a first screw, the first screw passing through a first hole (36) in the at least one upright, and/or **in that** the at least one upright is fastened to the second crossmember only by a second screw, the second screw passing through a second hole (37) in the at least one upright, the fragile zone (ZF) comprising an interface between the first hole and the first screw, and/or the fragile zone (ZF) comprising an interface between the second hole and the second screw.

6. Body for a motor vehicle (1), **characterized in that** it comprises a cradle (6), two side members (4) and a protection device (2) according to one of the preceding claims, the two side members (4) being intended to extend parallel to a longitudinal axis (X) of a vehicle, each of the two side members being fastened via a front end to the protection device, each of the two side members being fastened via a rear end to the cradle.

7. Motor vehicle (1), **characterized in that** it comprises a protection device (2) according to one of Claims 1 to 5 and/or a body according to the preceding claim.
